# EUROPEAN PATENT SPECIFICATION

(11) **EP 0 816 213 B1**
(45) Date of publication and mention of the grant of the patent: **04.07.2001**
(21) Application number: 96939947.6
(22) Date of filing: 27.11.1996
(51) Int. Cl.: B62D 61/00, B62D 37/00, A63G 25/00, B62K 17/00

(54) **VEHICLE WITH TWO PARALLEL WHEELS**
FAHRZEUG MIT ZWEI PARALLELEN RÄDERN
VEHICULE A DEUX ROUES PARALLELES

(30) Priority: 19.12.1995 ES 9600059
(43) Date of publication of application: 07.01.1998
(73) Proprietor: Defez Schmidt, José Luis, 15010 La Coruna (ES)
(72) Inventor: Defez Schmidt, José Luis, 15010 La Coruna (ES)
(86) International application number: ES9600228
(87) International publication number: WO9722511

(56) References cited:
- WO-A-89/06117
- DE-A- 3 103 961
- US-A- 3 891 234
- US-A- 4 163 567
- PATENT ABSTRACTS OF JAPAN vol. 10, no. 249 (M-511), 21 September 1984 & JP 61 077576 A (TOYODA AUTOM LOOM WORKS LTD), 21 April 1986

## Description

An engine powered vehicle of this kind is known from DE-A-3103961. An automatically controlled mechanism displaces the vehicle's battery pack, thereby maintaining an equilibrium in such a way that the protruding front and rear part of the vehicle are prevented from touching the ground.The present invention relates to a new vehicle assigned with preference to the transport of persons, the vehicle being displaced on two only parallel wheels while the vehicle is supported in equilibrium by means of a balancing device , the device being operated by his driver.The vehicle can be applied to sports because stimulates the feeling of equilibrium as a new competition variety , and the vehicle can be applied to recreational and didactics activities too as for adults as for children developing the psychomotive skill. Nowadays, in the technical state, this vehicle isn't known because there are others vehicles of three or more wheels , or vehicles with two wheels as bicycles or motorcycles which have situated its wheels in different axis. They haven't balancing devices , those vehicles being operated by the driver at the left and right sides, but isn't balanced at the front and rear parts. Even his appearance and his operation means are all different. The vehicle has a frame (2) which has installed a wheel (1) at the left and right sides , near of its gravity center or optionally is situated far from it and placed symmetryly to the bigger axis of the frame. The vehicle resting and travelling on the two only wheels. The frame bears directly or indirectly the brake mechanisms (4, 5 and 6) of the wheels, an engine, and transmission elements (3, 7 and 8 respectively). The balance of the front and rear parts is done by means of a balancing device situated along the frame, this device being constituted by a receptacle (10) in which some counterweights (12) are slid on a lot of bearings (11) the counterweights being guided by means of a lever (13) operated by the driver. Permanent and complementary counterweights (23) can be installed optionally in the front and rear parts of the frame. Said balancing device can be constituted by a container (19) in which liquid or powder is displaced by means of a single or double pump (20), piston or mechanical or electric mechanisms. Other balancing device version is refered to use of a pressure gas (21) device which , by means of nozzles (22) ejects said gas (21) towards the ground or towards the air , said nozzles being located at the front part and the rear part of the vehicle.

When the balance is right, the vehicle is rested on two only wheels (1) and the frame (2) reachs a horizontal position which is supported during the travelling of the machine, the balance desorders being corrected by means of the balancing device lever and the balance being helped by means of the driver's body.

The traction is achieved by means of the engine (3) and the transmission (7 and 8) to the wheels.The engine can be mechanical, electric or electromagnetic.One only engine , generaly electric , can be used in each wheel or the human force can be transmitted by means of mechanical devices in light vehicles.According to the versions the transmission can have a general clutch or a clutch in each wheel, an optional gear-box, an optional differential, gears and chains or pulleys and belts (7 & 8). The steering can be operated by means of different systems. If electric engines are used in each wheel , some switches will be installed, the switches being operated in each engine, and this switches will cut the electric current in an only engine and the vehicle will turn towards that side. Speed variation electronic devices can be used too. When an only electric engine is installed, a lever or steering wheel will work on a differential which will do turn the wheels to different speed and the vehicle being turned towards the slowest wheel side. This same system can be used in others engines types.

Other steering version consists to use an independent clutch in each wheel (18) worked by means of levers and steering wheel (17 and 14) which would couple in equal or different mode each wheel, and the turn is caused.

A system of different brakes for the steering in mechanical or hydraulic modes can be used for the steering reducing the speed of one the wheels more than the other one, or even blockading it and causading the in-mediate turn. This independent brake circuit for the steering will be operated by the same steering wheel or lever which disconnect the independent clutch and through a brake independent pump of each wheel.

For the general brake of the vehicle is useful any system which stops efficienty the wheels where the hydraulic circuit operating on discs is showed as the most efficient. In this way two independent circuits allow that if only one brake circuit is operated , the two wheels brakes simultaneously by means of a pedal (4) and its pump (5) to stop or to reduce the speed , or a lever or a steering wheel (14) working on only one wheel through other circuit and one of its others two independent pump work as steering. Independent pads and pincers for the steering (16) and for the general brakes (6) operates on the same disc in each wheel.Although to use in flat earthly isn't need a suspension system, can be installed for abrupt ground. One or more seats accesorily are placed (24) for the user/s according to the dimensions of the model as well as bodywork elements (25), a small roller (26) which can be hidden for the support in the parking and the protection in accidental case.

The vehicle offers the advantage to incorporate to sporting world a new system to develop the feeling of equilibrium, the reflex, the ability, the competidor spirit and to feel a new travelling in equilibrium way.

It contribute, in short, to a great human perfection.

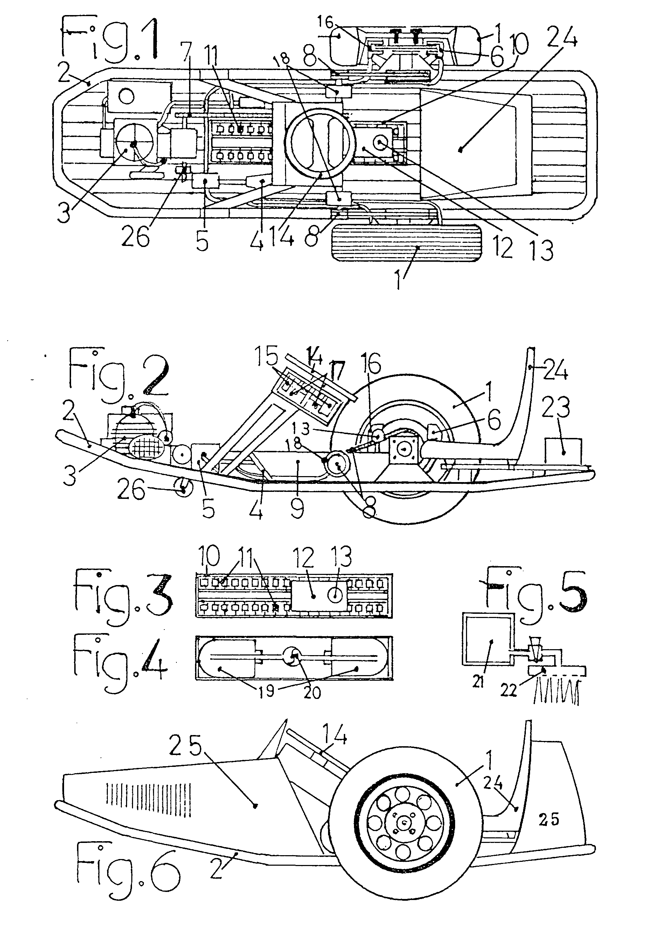

The drawings represent the vehicle and its fundamental parts.The figure 1 shows the upper view in which can be seen the frame (2), the wheels detail (1) in which the right wheel is representated in section to best clarity of the place of its internal parts the balancing device with its internal components (10,11,12 & 13) the engine (3), the steering with the steering wheel , the clutch devices and the steering brakes (14,18 & 16) the brakes (4, 5 and 6) and the seat (24).

The figure 2 corresponds to the left side view in which the left wheel representation and its internal pieces have been omited to see better the vehicle that in other way it would be hidden; the balancing device place (9), the interior of the steering control box , with its two directional brake pumps (15) , and directional clutches control levers (17) operated by a steering wheel which is outside to the box (14), the general brake pads (6) and directional brake pads (16) footbrake (4) and its pump (5), the engine (3), the seat (24) , the optional fix counterweights (23), and the support roller (26) to parking and frame protection if the equilibrium is accidentally lost, are detailled.

The figure 3 represents the balancing device in upper view with its internal components: receptacle (10),bearings (11), mobile counterweights (12) , and counterweights displacement control lever (13). The figure 4 represents the balancing device version to displace liquid or powder materials representing the inside of the two containers (19) which contain them and the single or double pump (20) which displace them. The figure 5 represents the balancing device version for pressure gas ejected by nozzles (21 and 22) while a valve opens or closes the gas pass. The figure 6 represents the left side view with its external look of the vehicle with the bodywork elements (25) on the frame.

Because of the materials used in its production such as iron or aluminium tube, metallic materials of several strength, plastic materials and the habituals materials of a engine or the wheels as well as the habitual liquid for the hydraulic systems and combustion in the engine, and the assembly on the frame of the different pieces which constitutes the propulsion, transmission, balancing means, the steering, the brakes and suspension systems, and seats and accesories, etc, and because of the machine is very versatile and the performances which can be got, it is a cheap vehicle easyly marketable directed to heterogeneous people and so the vehicle has a very profitable industrial production.

To operate, the user is placed in the seat with his left foot in front of footbrake and his right foot on the acelerator pedal and one hand on the steering wheel and the other one catching the balancing lever; with the engine in ignition if it's a fuel engine or with the engine switched in stand-by if it's a electric engine , the user will displace with the lever , the counterweights until the front and rear parts of the vehicle are found raised and the vehicle is supported on the ground on the only two wheels and at perfect equilibrium , while the footbrake is pressed if the ground needs it. In this way to accelerate the engine and to release the brake; anautomatic clutch will couple the transmission and the vehicle will beguin to advance; in this moment the driver will change the balancing lever position and will correct the front part excessive raising because of start inertia and allowing continue in perfect equilibrium; on the contrary , the balancing lever will must to be corrected towards the rear part of the vehicle to brake and the balancing lever must to be corrected continuosly during the running.

The expertise will get its correct use.

## Claims

1. VEHICLE WITH TWO PARALLEL WHEELS (1) COAXIALLY SITUATED AT THE LEFT AND RIGHT SIDES OF A FRAME (2) , THE VEHICLE BEING OPERATED BY BALANCING MEANS (9) WHICH BALANCE A FRONT PART AND A REAR PART OF THE VEHICLE, SAID REAR AND FRONT PART EXTENDING BEYOND THE DIAMETER OF THE WHEELS (1),SAID VEHICLE POWERED BY AN ENGINE (3) OR A HUMAN FORCE TRANSMISSION MECHANISM, characterised in that said balancing means (9) is operated manually, and in that said balancing means (9) is constituted by a balancing device comprising a receptacle (10)which contains a lot of rollers or bearings (11) on which counterweights (12)are slid and operated by a mechanical or hydraulic application lever (13).

2. VEHICLE WITH TWO PARALLEL WHEELS (1) COAXIALLY SITUATED AT THE LEFT AND RIGHT SIDES OF A FRAME (2) , THE VEHICLE BEING OPERATED BY BALANCING MEANS (9) WHICH BALANCE A FRONT PART AND A REAR PART OF THE VEHICLE, SAID REAR AND FRONT PART EXTENDING BEYOND THE DIAMETER OF THE WHEELS (1),SAID VEHICLE POWERED BY AN ENGINE (3) OR A HUMAN FORCE TRANSMISSION MECHANISM, characterised in that said balancing means (9) is operated manually, and in that said balancing means (9) is constituted by a balancing device comprising at least one container (19) in which liquid or powder is displaced by means of a single or double pump (20) , piston or mechanical or electric mechanisms.

3. VEHICLE WITH TWO PARALLEL WHEELS (1) COAXIALLY SITUATED AT THE LEFT AND RIGHT SIDES OF A FRAME (2) , THE VEHICLE BEING OPERATED BY BALANCING MEANS (9) WHICH BALANCE A FRONT PART AND A REAR PART OF THE VEHICLE, SAID REAR AND FRONT PART EXTENDING BEYOND THE DIAMETER OF THE WHEELS (1),SAID VEHICLE POWERED BY AN ENGINE (3) OR A HUMAN FORCE TRANSMISSION MECHANISM, characterised in that said balancing means (9) is operated manually, and in that said balancing means (9) is constituted by a balancing device comprising a pressure gas (21) device which,by means of nozzles (22) ejects said gas (21) towards the ground or towards the air, said nozzles being located at the front part and the rear part of the vehicle.

4. VEHICLE ACCORDING TO ONE OF THE CLAIMS 1 TO 3 , characterised in that the frame (2) has installed counterweights (23) fixed at the front part and/or the rear part of the vehicle.

## Patentansprüche

1. FAHRZEUG MIT ZWEI PARALLELEN RÄDERN (1), DIE KOAXIAL IN DER LINKE UND RECHTE SEITE DES CHASSIS (2) ANGEBRACHT SIND, DAS FAHRZEUG WIRD DURCH EINEN AUSGLEICHER (9), DER DIE VORDER UND HINTER SEITEN DES SELBEN STABILISIERT, GESTEUERT , DAS CHASSIS STRECKT SICH WEIT ÜBER DEN DURCHMESSER DER RÄDERN (1), DAS FAHRZEUG WIRD DURCH EINEN MOTOR (3) ODER EIN MENSCHLICHER TRIEBWERK IN BEWEGUNG GESETZT, dieser charakterisiert sich weil jener Ausgleicher (9), handwerklich funktioniert und aus einem Mechanismus besteht, gestaltet mit einem Behältnis (10), der mehrere Walzen oder Kugellager (11) enthält, auf denen sich Gegengewichte (12) ausgleiten, die mit einer mechanisch oder hydraulisch verwendete Brechstange bedient werden.

2. FAHRZEUG MIT ZWEI PARALLELEN RÄDERN (1), DIE KOAXIAL IN DER LINKE UND RECHTE SEITE DES CHASSIS (2) ANGEBRACHT SIND, DAS FAHRZEUG WIRD DURCH EINEN AUSGLEICHER (9), DER DIE VORDER UND HINTER SEITEN DES SELBEN STABILISIERT, GESTEUERT , DAS CHASSIS STRECKT SICH WEIT ÜBER DEN DURCHMESSER DER RÄDERN (1), DAS FAHRZEUG WIRD DURCH EINEN MOTOR (3) ODER EIN MENSCHLICHER TRIEBWERK IN BEWEGUNG GESETZT, dieser charakterisiert sich weil jener Ausgleicher (9), handwerklich funktioniert und aus einem Mechanismus besteht, gestaltet wenigstens mit einem Tank (19) in dem Flüssigkeit oder Pulver durch eine einfache oder doppelte Bombe (20) , ein Kolben, oder ein mechanisches oder elektrisches Mechanismus verschoben wird.

3. FAHRZEUG MIT ZWEI PARALLELEN RÄDERN (1), DIE KOAXIAL IN DER LINKE UND RECHTE SEITE DES CHASSIS (2) ANGEBRACHT SIND, DAS FAHRZEUG WIRD DURCH EINEN AUSGLEICHER (9), DER DIE VORDER UND HINTER SEITEN DES SELBEN STABILISIERT, GESTEUERT , DAS CHASSIS STRECKT SICH WEIT ÜBER DEN DURCHMESSER DER RÄDERN (1), DAS FAHRZEUG WIRD DURCH EINEN MOTOR (3) ODER EIN MENSCHLICHER TRIEBWERK IN BEWEGUNG GESETZT, dieser charakterisiert sich weil jener Ausgleicher (9), handwerklich funktioniert und aus einem Mechanismus besteht, gestaltet mit einem Druckgastank (21) , der durch Düsen (22) jenes Gas (21) zu dem Boden oder in die Luft ausstosst , diese Düsen liegen in der vorder und hinter Teil des Fahrzeugs.

4. FAHRZEUG NACH EINEM DER ANSPRÜCHE 1 BIS 3 , charakterisiert weil das Chassis (2) fixe Gegengewichte (23) in der vorder und hinter Teil des Fahrzeugs eingerichtet hat.

## Revendications

1. VÉHICULE À DEUX ROUES PARALLELES (1), LESQUELLES SONT SITUÉES COAXIALMENT AUX CÔTÉS GAUCHE ET DROIT D'UN CHÂSSIS (2) , EN ÉTANT OPÉRÉ CE VÉHICULE MOYENNANT UN ÉQUILIBREUR (9) QUI ÉQUILIBRE LES PARTS AVANT ET ARRIÈRE DU MEME, LESQUELLES S'ÉTENDENT DEHORS DU DIAMÈTRE DES ROUES (1), EN ÉTANT IMPULSÉ CE VÉHICULE PAR UN MOTEUR (3) OU UN MÉCANISME DE TRANSMISSION DE FORCE HUMAINE, et ce véhicule est caractérisé parce que ce équilibreur (9) s'opére manuelment et il est constitué par un dispositif formé par un réceptacle (10) qui contenit beaucoup de rouleaus ou roulements (11) sur lesquels se glissent quelqu'uns contrepoids (12) qui s'opérent par un levier mécanique ou de application hydraulique.

2. VÉHICULE À DEUX ROUES PARALLELES (1), LESQUELLES SONT SITUÉES COAXIALMENT AUX CÔTÉS GAUCHE ET DROIT D'UN CHÂSSIS (2) , EN ÉTANT OPÉRÉ CE VÉHICULE MOYENNANT UN ÉQUILIBREUR (9) QUI ÉQUILIBRE LES PARTS AVANT ET ARRIÈRE DU MÊME, LESQUELLES S'ÉTENDENT DEHORS DU DIAMÈTRE DES ROUES (1), EN ÉTANT IMPULSÉ CE VÉHICULE PAR UN MOTEUR (3) OU UN MÉCANISME DE TRANSMISSION DE FORCE HUMAINE, et ce véhicule est caractérisé parce que ce équilibreur (9) s'opére manuelment et il est constitué par un dispositif formé au moins par un dépôt (19) dans lequel se glisse liquide ou poudre moyennant une simple ou double pompe (20), un piston, ou mécanismes électriques ou mécaniques.

3. VÉHICULE À DEUX ROUES PARALLELES (1), LESQUELLES SONT SITUÉES COAXIALMENT AUX CÔTÉS GAUCHE ET DROIT D'UN CHÂSSIS (2) , EN ÉTANT OPÉRÉ CE VÉHICULE MOYENNANT UN ÉQUILIBREUR (9) QUI ÉQUILIBRE LES PARTS AVANT ET ARRIÈRE DU MÊME , LESQUELLES S'ÉTENDENT DEHORS DU DIAMÈTRE DES ROUES (1), EN ÉTANT IMPULSÉ CE VÉHICULE PAR UN MOTEUR (3) OU UN MÉCANISME DE TRANSMISSION DE FORCE HUMAINE, et ce véhicule est caractérisé parce que ce équilibreur (9) s'opére manuelment et il est constitué par un dispositif formé par un dépôt de gaz à pression (21), qui moyennant tuyères (22) expulse ce gaz (21) vers le sol ou vers l'air, et ces tuyères sont situées aux parts avant et arrière du véhicule.

4. VÉHICULE D'ACCORD À UNE DES REVENDICATIONS 1 À 3 , QUI EST caractérisé parce que sur le châssis (2) sont installés contrepoids (23) fixes à la part avant et/ou à la part arrière du véhicule.
